# EUROPEAN PATENT SPECIFICATION

(11) **EP 3 865 383 B1**
(45) Date of publication and mention of the grant of the patent: **18.10.2023**
(21) Application number: 21150914.6
(22) Date of filing: 11.01.2021
(51) Int. Cl.: B62J 17/02, B62K 11/04, B62M 7/06

(54) **STRADDLED ELECTRIC VEHICLE**
ELEKTRISCHES SATTELFAHRZEUG
VÉHICULE ÉLECTRIQUE À CALIFOURCHON

(30) Priority: 12.02.2020 JP 2020021734
(43) Date of publication of application: 18.08.2021
(73) Proprietor: Yamaha Hatsudoki Kabushiki Kaisha, Iwata-shi, Shizuoka 438-8501 (JP)
(72) Inventor: MANDAI, Suguru, Iwata-shi, Shizuoka 438-8501 (JP); GOTO, Yuji, Iwata-shi, Shizuoka 438-8501 (JP)
(74) Representative: Grünecker Patent- und Rechtsanwälte PartG mbB

(56) References cited:
- EP-A1- 3 363 725
- EP-B1- 0 669 246
- JP-A- 2013 203 083
- US-B2- 8 286 746

## Description

This invention relates to a straddled electric vehicle.

Prior art document JP 2013 203083 A discloses a straddled vehicle with a front wheel, a rear wheel, a first exterior cover provided at an upside of the rear wheel with regard to upward and downward directions of the vehicle and extending in forward and backward directions of the vehicle in a side view and a second exterior cover provided at a downside of the first exterior cover with regard to upward and downward directions of the vehicle and extending in the forward and backward directions of the vehicle in the side view. A virtual surface is defined as a surface is connecting an exterior surface of the first exterior cover and an exterior surface of the second exterior cover. The second exterior cover is placed to form a gap extending in the forward and backward directions of the vehicle between a first end extending in the forward and backward directions of the first exterior cover and a second end extends in the forward and backward directions of the second exterior cover and faces the first end and inside of the virtual surface. At least one hole is formed in a part of the second end.

For example, JP 9-104380 A discloses a straddled electric vehicle having an exterior including a plurality of exterior covers.

Here, in the straddled electric vehicle disclosed in JP 9-104380 A, water scattered by a rear wheel may attach to the exterior covers and be accumulated in gaps between the exterior covers. The water accumulated in the gaps moves along the gaps. When the amount of the water accumulated in the gaps is larger, the water drips downward while moving along the gaps. When the water dripping occurs, the exterior surfaces of the exterior covers become dirty and aesthetics becomes lower.

It is the object of the present invention to provide a straddled electric vehicle with suppressed degradation of aesthetics due to attachment of water scattered by a rear wheel to exterior covers.

According to the present invention said object is solved by a straddled electric vehicle having the features of independent claim 1. Preferred embodiments are laid down in the dependent claims.
(1) A straddled electric vehicle proposed in this disclosure includes a front wheel, a rear wheel, a first exterior cover provided at an upside of the rear wheel and extending in forward and backward directions in a side view, a second exterior cover provided at a downside of the first exterior cover and extending in the forward and backward directions in the side view, and a virtual surface defined as a surface connecting an exterior surface of the first exterior cover and an exterior surface of the second exterior cover, wherein the second exterior cover is placed to form a gap extending in the forward and backward directions between a first end extending in the forward and backward directions of the first exterior cover and a second end extending in the forward and backward directions of the second exterior cover and facing the first end and inside of the virtual surface, and at least one hole is formed in a part of the second end. According to the straddled electric vehicle, degradation of aesthetics due to attachment of water scattered by the rear wheel to the exterior cover may be suppressed.
(2) In the straddled electric vehicle according to (1), the hole may be formed at a rear side of a front end of the rear wheel. According to the configuration, water dripping in a visible part in an outer appearance may be suppressed.
(3) In the straddled electric vehicle according to (1) or (2), an area of the exterior surface at a front side of the hole of the second exterior cover may be larger than an area of the exterior surface at a rear side of the hole. According to the configuration, the water dripping in the visible part in the outer appearance may be suppressed.
(4) In the straddled electric vehicle according to any one of (1) to (3), a part of the hole may be covered by the first exterior cover and according to the invention another part of the hole is exposed to outside in the side view. According to the configuration, molding of the hole is easier and the part visually recognized from outside of the hole may be made smaller.
(5) In the straddled electric vehicle according to (4), a width of the other part in the forward and backward directions may be from 2 mm to 10 mm.
(6) In the straddled electric vehicle according to (4) or (5), a width of the other part in upward and downward directions may be from 3 mm to 10 mm.
(7) In the straddled electric vehicle according to any one of (1) to (6), the gap may be inclined downward toward a front side.
(8) In the straddled electric vehicle according to any one of (1) to (7), the hole may be a through hole. According to the configuration, water may be drained to the inside of the second exterior cover via the through hole.
(9) In the straddled electric vehicle according to any one of (1) to (8), the first exterior covers and the second exterior covers may be respectively provided in a left portion and a right portion of the vehicle, and the holes may be respectively formed in the left portion and the right portion.
(10) The straddled electric vehicle according to any one of (1) to (9) may include a tandem step on which a foot of a tandem rider is mounted, wherein the second exterior cover may overlap with the tandem step in the side view. According to the configuration, the foot of the tandem rider sitting on a tandem seat may be prevented from being dirty.
(11) The straddled electric vehicle according to any one of (1) to (10) may include a tail lamp provided in a rear portion of the vehicle, and a rear exterior cover provided below the tail light and above the rear wheel and adjacent to the first exterior cover.
(12) In the straddled electric vehicle according to any one of (1) to (11), the second exterior cover may include a curving portion curving toward the inside in vehicle width directions and forming the second end, and the hole may be formed in the curving portion.

### BRIEF DESCRIPTION OF THE DRAWINGS

FIG. 1 is a side view showing an overall configuration of a straddled electric vehicle according to an embodiment.
FIG. 2 is a side view of an internal structure of the straddled electric vehicle shown in FIG. 1.
FIG. 3 is an enlarged side view showing a first exterior cover and a second exterior cover.
FIG. 4 is an end surface view showing a cut end surface along a IV-IV section surface in FIG. 3.
FIG. 5 is an end surface view showing a cut end surface along a V-V section surface in FIG. 3.
FIG. 6 is a perspective view of a rear portion of the straddled electric vehicle as seen from a diagonally left rear side.
FIG. 7 is an enlarged end surface view showing a vicinity of a through hole in FIG. 5.
FIG. 8 is a side view showing the second exterior cover.
FIG. 9 is an end surface view showing a cut end surface along a section surface passing through a hole in a first modified example.
FIG. 10 is an end surface view showing a cut end surface along a section surface passing through a through hole in a second modified example.

### DETAILED DESCRIPTION OF THE PREFERRED EMBODIMENTS

As below, a preferred embodiment (hereinafter, referred to as "the embodiment") will be explained with reference to the drawings.

### [Summary of Overall Configuration of Straddled Electric Vehicle]

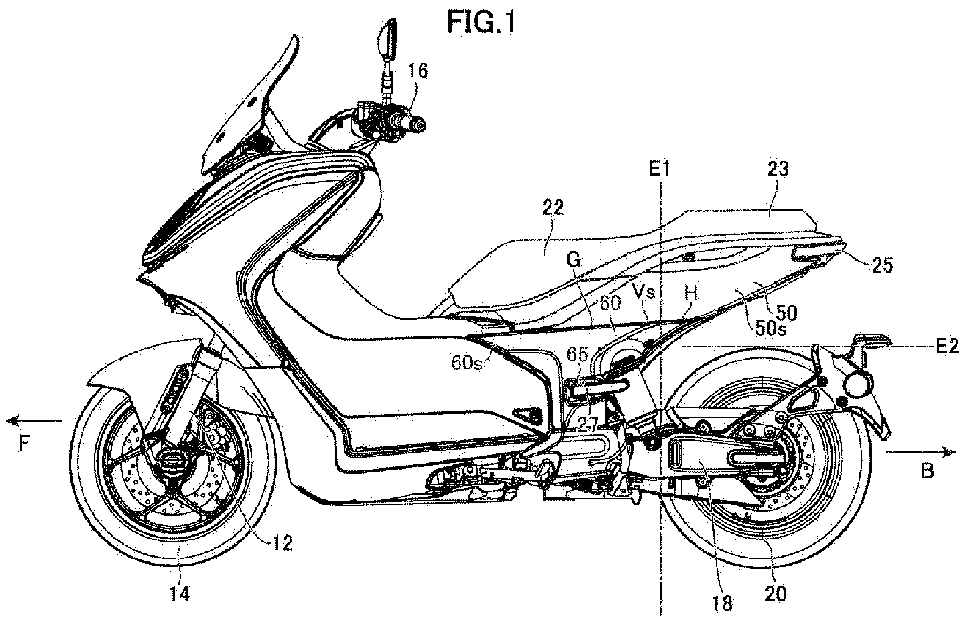

FIG. 1 is the side view showing the overall configuration of the straddled electric vehicle according to the embodiment. The illustrated straddled electric vehicle is an electric motorcycle, however, any number of wheels may be provided. The straddled electric vehicle may be e.g. an irregular terrain four-wheel vehicle. The straddled electric vehicle may be of an on-road type, off-road type, or scooter type.

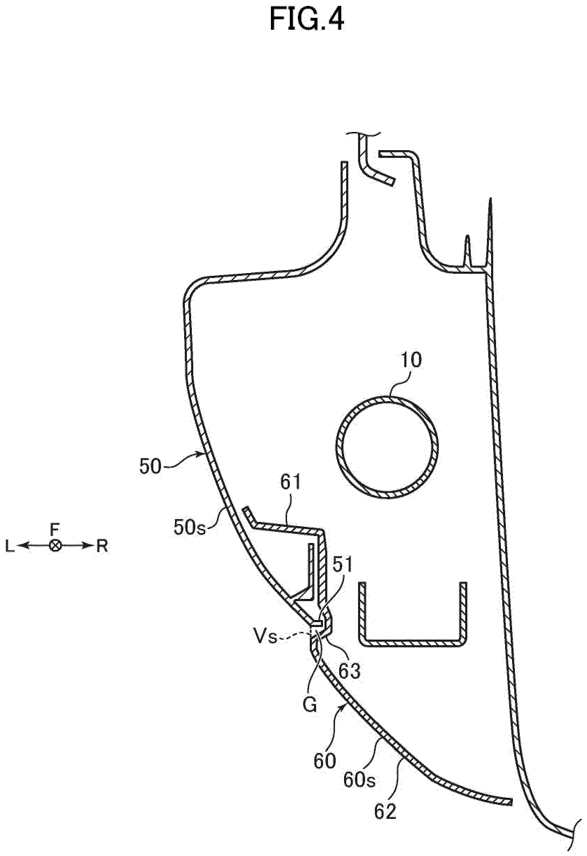

In the embodiment, directions are based on the straight-ahead direction of the straddled electric vehicle. For example, arrows F and B shown in FIG. 1 show a forward direction and a backward direction, respectively. Upward and downward directions are upward and downward directions with reference to the forward direction. Further, arrows R and L shown in FIG. 4 etc. show a rightward direction and a leftward direction, respectively. Further, in the embodiment, the leftward and rightward directions are vehicle width directions.

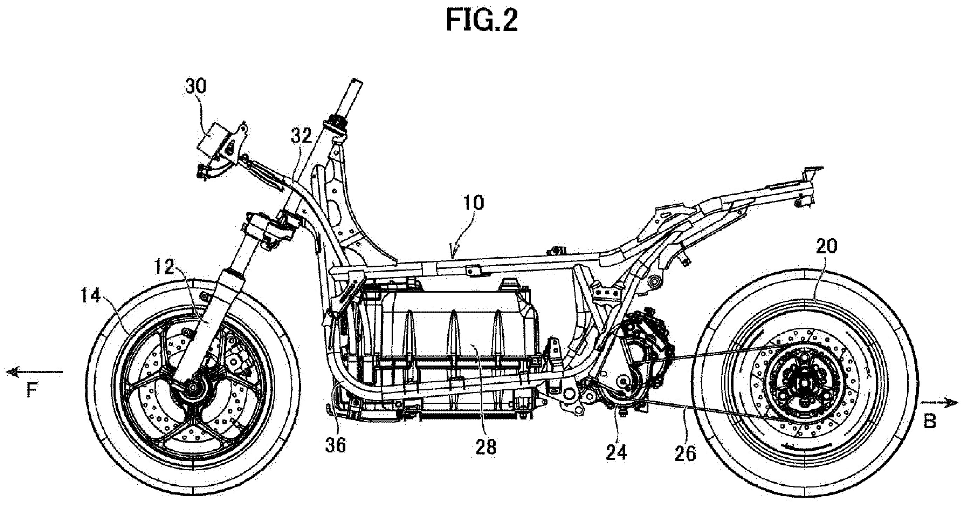

FIG. 2 is the side view of the internal structure of the straddled electric vehicle shown in FIG. 1. The straddled electric vehicle includes a frame 10. In the front end portion of the frame 10, a front folk 12 is supported rotatably in the leftward and rightward directions. A front wheel 14 is rotatably supported in the lower end portion of the front folk 12. A handle 16 (FIG. 1) for steering is provided in the upper end portion of the front folk 12. A rear unit 18 (FIG. 1) is supported swingably in the upward and downward directions in a rear lower portion of the frame 10. A rear wheel 20 is rotatably supported in a rear end portion of the rear unit 18.

A main seat 22 (FIG. 1) for a driver to be seated is provided in a rear upper portion of the frame 10. As show in FIG. 1, a tandem seat 23 is provided at the side rearward of the main seat 22. Further, an accommodation box (not shown) in which a helmet or the like can be accommodated is provided under the main seat 22 and the tandem seat 23. Further, a tail light 25 is provided at the side rearward of the tandem seat 23. Tandem steps 27 as foot rests for a tandem rider are provided at the front downsides of the tandem seat 23.

The straddled electric vehicle includes a drive motor 24 that drives the rear wheel 20. The drive motor 24 is e.g. a three-phase alternating-current motor. The drive motor 24 is supported by the frame 10. The driving force of the drive motor 24 is transmitted to the rear wheel 20 via a transmitting member such as a belt 26. The drive motor 24 is not limited to that, but may drive the front wheel 14 or drive both the front wheel 14 and the rear wheel 20.

The straddled electric vehicle includes a battery 28. The battery 28 is placed at the downside of the seat 22. A charging connector 30 is electrically connected to the battery 28 via a cable 32. During charging, a power supply plug (not shown) is inserted into the charging connector 30 to enable charging.

The exterior of the straddled electric vehicle includes a plurality of exterior covers. The respective exterior covers are preferably formed using e.g. resin materials.

In the embodiment, the plurality of exterior covers include at least first exterior covers 50 and second exterior covers 60. The first exterior covers 50 and the second exterior covers 60 have shapes extending in the forward and backward directions. The first exterior covers 50 and the second exterior covers 60 are provided in the side rearward portions of the straddled electric vehicle. Note that, in FIG. 1, the first exterior cover 50 and the second exterior cover 60 provided in the left portion of the straddled electric vehicle are shown, and the first exterior cover 50 and the second exterior cover 60 are similarly provided in the right portion of the straddled electric vehicle.

The first exterior cover 50 is provided at the upside of the rear wheel 20. More specifically, at least a part of the first exterior cover 50 is provided at the side rearward of a rear end E1 of the rear wheel 20 and at the upside of an upper end E2 of the rear wheel 20. Further, the first exterior cover 50 is provided at the downside of the tandem seat 23 in the side view.

The second exterior cover 60 is provided at the downside of the first exterior cover 50 and adjacent to the first exterior cover 50. At least a part of the second exterior cover 60 is provided at the side rearward of the rear end E1 of the rear wheel 20 in the forward and backward directions and at the upside of the upper end E2 of the rear wheel 20.

### [Details of Configuration of Exterior Covers]

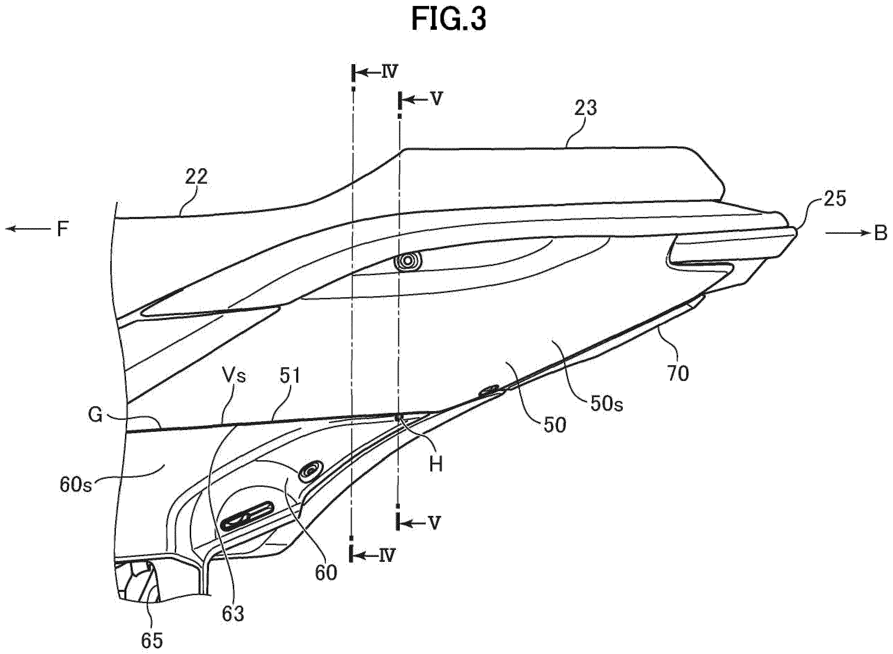

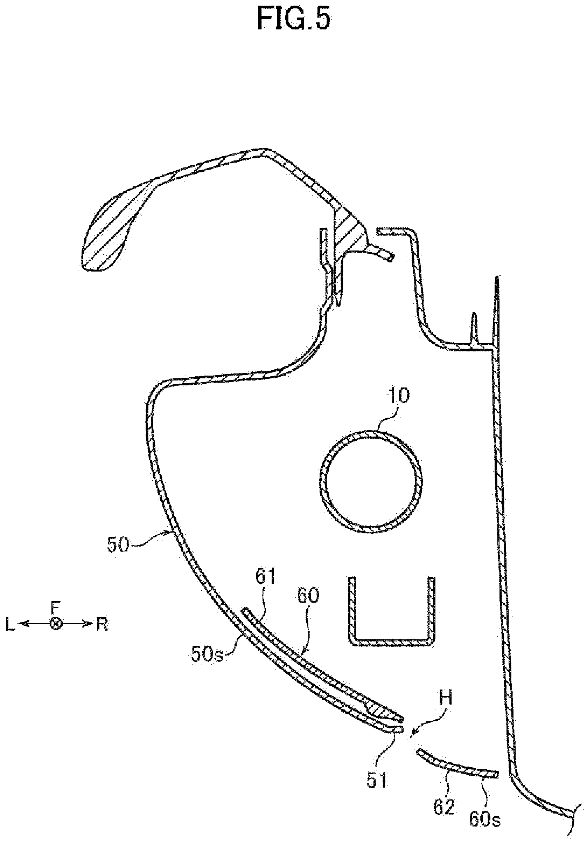

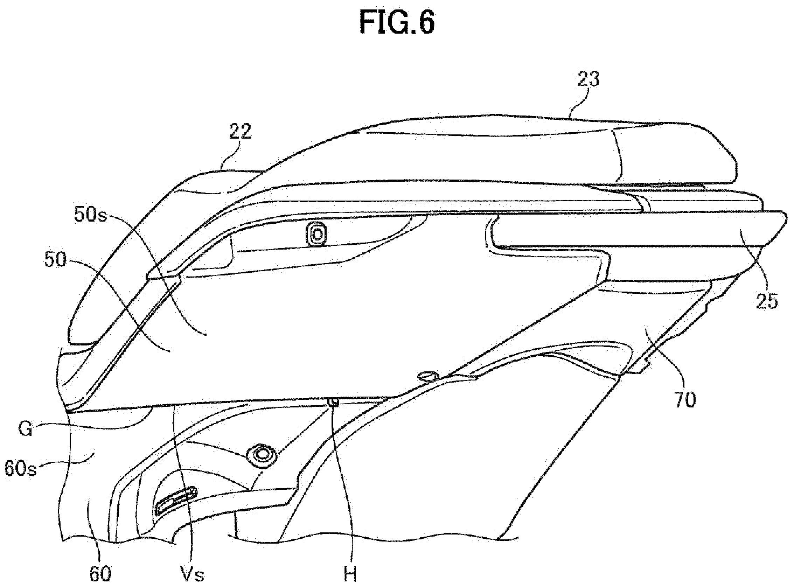

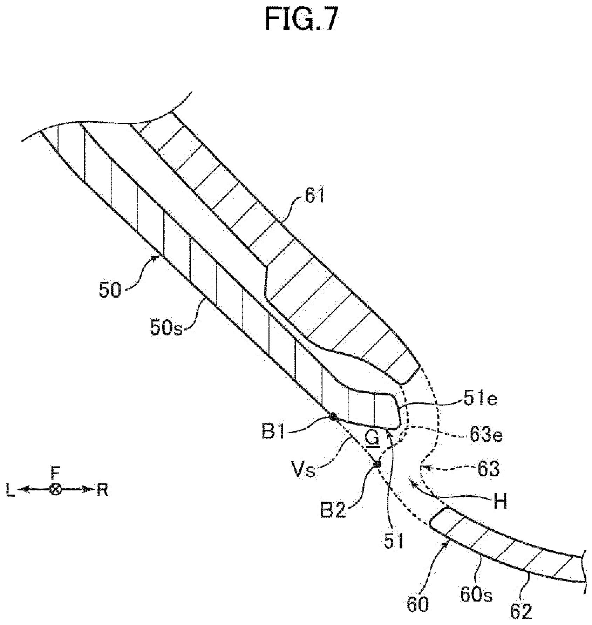

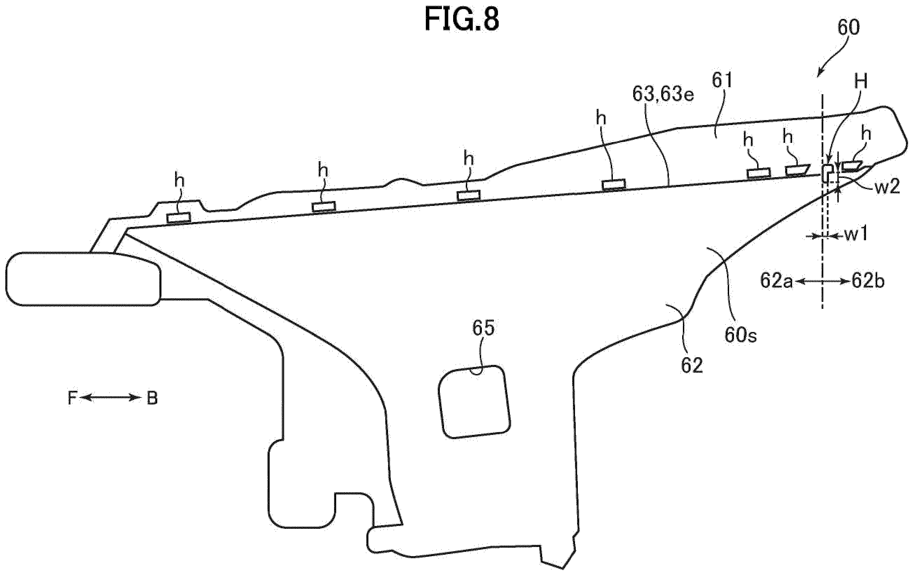

FIG. 3 is the enlarged side view showing the first exterior cover and the second exterior cover. FIG. 4 is the end surface view showing the cut end surface along the IV-IV section surface in FIG. 3. Specifically, FIG. 4 shows the cut end surface in the section surface extending in the vertical direction and passing through the front side of a through hole H. FIG. 5 is the end surface view showing the cut end surface along V-V section surface in FIG. 3. Specifically, FIG. 5 shows the cut end surface in the section surface extending in the vertical direction and passing through the through hole H. FIG. 6 is the perspective view of the rear portion of the straddled electric vehicle as seen from the diagonally left side rearward. FIG. 7 is the enlarged end surface view showing the vicinity of the through hole in FIG. 5. FIG. 8 is the side view showing the second exterior cover.

FIGS. 4 and 5 also show end surfaces of the members placed at the inside of the exterior covers in the vehicle width directions including a part of the frame 10, however, the detailed explanation thereof will be omitted.

The first exterior cover 50 has a lower end (first end) 51 extending in the forward and backward directions. Note that, in the embodiment, as shown in FIG. 7, the lower end 51 refers to a part including a lower end surface 51e of the first exterior cover 50. Further, the lower end 51 has a shape bending toward the inside in the vehicle width directions.

The second exterior cover 60 includes an upper portion 61, a lower portion 62, and a curving portion 63 connecting the upper portion 61 and the lower portion 62.

The upper portion 61 is placed at the inside of the first exterior cover 50 in the vehicle width directions. That is, the upper portion 61 is a part covered by the first exterior cover 50 and not visually recognized from outside.

The lower portion 62 is a part not covered by the first exterior cover 50. That is, the lower portion 62 is a part visually recognized from outside and forming a part of the exterior of the straddled electric vehicle. As shown in FIG. 8 etc., the lower portion 62 has a shape with a width in the upward and downward directions wider forward from the rear end thereof and narrower further forward in the side view. As shown in FIG. 8, a through hole 65 is formed in a part having the maximum width in the upward and downward directions. As shown in FIG. 1, the tandem step 27 is attached to the vehicle main body via the through hole 65.

As shown in FIG. 7, the curving portion 63 curves toward inside in the vehicle width directions to avoid the lower end 51 of the first exterior cover 50 and forms an end portion (second end) 63e. Further, the curving portion 63 curves so that the upper portion 61 of the second exterior cover 60 may be placed along the inner surface of the first exterior cover 50 at the inside of the first exterior cover 50. Note that, in FIG. 7, the curving portion 63 is shown by dotted lines.

The straddled electric vehicle has a virtual surface Vs defined as a surface connecting an exterior surface 50s of the first exterior cover 50 and an exterior surface 60s of the second exterior cover 60. Here, the exterior surface 50s is a surface visually recognized from outside of the first exterior cover 50 and the exterior surface 60s is a surface visually recognized from outside of the second exterior cover 60. The virtual surface Vs is not a surface that physically exists, but a virtual surface connecting a start point B1 of the bending of the lower end 51 of the first exterior cover 50 and the a start point B2 of the bending of the curving portion 63. In FIG. 7, the virtual surface Vs is shown by a dashed-two dotted line.

The second exterior cover 60 is placed to form a gap G extending in the forward and backward directions between the lower end 51 extending in the forward and backward directions of the first exterior cover 50 and the end portion 63e extending in the forward and backward directions of the second exterior cover 60 and facing the lower end 51. The gap G is a part formed inside of the virtual surface Vs in the vehicle width directions.

As shown in FIG. 3 etc., the lower end 51 of the first exterior cover 50 has a shape inclined downward toward the front side. Accordingly, the gap G is formed to be inclined downward toward the front side.

Further, the straddled electric vehicle includes a rear exterior cover 70 (FIG. 6) provided adjacent to the first exterior cover 50 and the second exterior cover 60 and above the rear wheel 20. The rear exterior cover 70 is provided below the tail light 25 and above the rear wheel 20.

### [Through Hole formed in Second Exterior Cover]

When the rain falls or the straddled electric vehicle runs on a puddle, water attaches to the rear wheel 20. In a case where the acceleration changes such that the vehicle is decelerated or stopped with the water attached to the rear wheel 20, the water attached to the rear wheel 20 may fly and attach to the external cover. Specifically, the water may attach to the first exterior cover 50 and the rear exterior cover 70 provided at the upside of the rear wheel 20. This is because the first exterior cover 50 and rear exterior cover 70 and the rear wheel 20 are placed to face one another via no member in view of design.

The water attached to the first exterior cover 50 and rear exterior cover 70 drips downward due to the gravitational force. Part of the water attached to the first exterior cover 50 and rear exterior cover 70 and dripping downward enters the gap G formed between the lower end 51 of the first exterior cover 50 and the end portion 63e (curving portion 63) of the second exterior cover 60.

The water entering the gap G moves along the gap G toward the front side of the vehicle. Particularly, in the embodiment, as described above, the gap G is formed to be inclined downward toward the front side, and thereby, the water entering the gap G easily moves toward the front side.

When the amount of water entering the gap G is larger, the water is not fully held within the gap G and drips downward while moving toward the front side of the vehicle. Thereby, water dripping may be visually recognized on the exterior surface 60s of the second exterior cover 60 and aesthetics of the straddled electric vehicle may be lower.

As shown in FIG. 1, in the side view, the second exterior cover 60 is provided in the position overlapping with the tandem step 27. Accordingly, the foot of the tandem rider sitting on the tandem seat 23 may be dirty by the water attached to the second exterior cover 60.

In the embodiment, the through hole H is formed in the end portion 63e (curving portion 63) of the second exterior cover 60. Thereby, the water moving along the gap G toward the front side enters the through hole H. The water entering the through hole H drips to immediately below the through hole H of the exterior surface 60s of the second exterior cover 60 or is drained toward the inside of the second exterior cover 60 via the through hole H.

Here, as shown in FIG. 8, of the second exterior cover 60, a part at the front side of the front end of the through hole H is referred to as "front portion 62a" and a part at the side rearward of the front end of the through hole H is referred to as "rear portion 62b". The front portion 62a has a larger surface area than the rear portion 62b. That is, the front portion 62a is more visible than the rear portion 62b in the outer appearance.

The through hole H is formed at the side rearward of the front portion 62a and the water moving along the gap G toward the front side is blocked before reaching the front portion 62a. Accordingly, the water dripping on the exterior surface 60s of the front portion 62a of the second exterior cover 60 is suppressed. That is, the water dripping in the visible part of the second exterior cover 60 in the outer appearance is suppressed.

Furthermore, referring to FIGS. 7 and 8, the details of the through hole H will be explained.

The exterior cover formed using the resin material is molded using a mold. When the through hole H is smaller, the molding is harder. On the other hand, when the through hole H is larger, the through hole H is visible in the outer appearance and aesthetics of the straddled electric vehicle is degraded.

Accordingly, in the embodiment, as shown in FIG. 8, the through hole H is formed in the end portion 63e and the upper portion 61 of the second exterior cover 60. As described above, the upper portion 61 of the second exterior cover 60 is covered by the first exterior cover 50 and the part of the through hole H formed in the upper portion 61 is not visually recognized from outside. The configuration is employed, and thereby, molding using the mold may be easier and the part of the through hole H visually recognized from outside may be made smaller.

Specifically, in the embodiment, in the side view, a width w1 of the part of the through hole H exposed to the outside in the forward and backward directions is set to 3 mm and a width w2 in the upward and downward directions is set to 4 mm. Note that, in the side view, the width w1 of the part of the through hole H exposed to the outside in the forward and backward directions is not limited to that, but may be from 2 mm to 10 mm. Further, the width w2 of the part of the through hole H exposed to the outside in the upward and downward directions may be from 3 mm to 10 mm.

FIG. 8 shows an example in which the width of the part of the through hole H not exposed to the outside in the forward and backward directions is wider than the width of the exposed part in the forward and backward directions and the shape of the through hole H in the side view is substantially an L-shape. Note that, the shape of the through hole H in the side view is not limited to that, but may be substantially a T-shape or I-shape.

As shown in FIG. 8, in the upper portion 61 of the second exterior cover 60, through holes h for drainage may be appropriately formed in addition to the through hole H.

In the embodiment, the distance between the start point B1 of the bending of the lower end 51 of the first exterior cover 50 and the start point B2 of the bending of the curving portion 63 (i.e., the width of the virtual surface Vs (the maximum width of the gap G)) is set to 5 mm. Note that the distance is not limited to that, but may be from 4 mm to 6 mm.

In the above described embodiment, the simple configuration in which the through hole H is formed in the second exterior cover 60 is employed, and thereby, the influence on the design of the straddled electric vehicle may be minimized and degradation of the aesthetics due to attachment of water to the exterior surface may be suppressed. Further, the water dripping in the front portion 62a of the second exterior cover 60 may be suppressed, and thereby, water attachment to the foot of the tandem rider sitting on the tandem seat 23 may be suppressed.

### [First Modified Example]

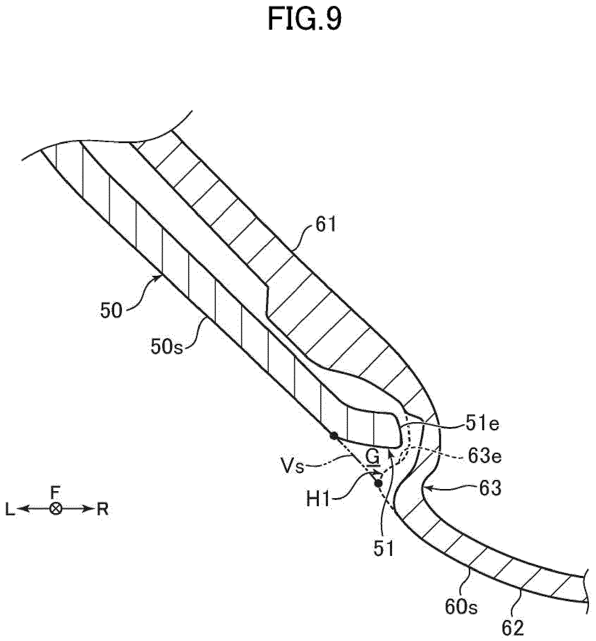

In the above described embodiment, the example in which the through hole H is formed in the curving portion 63 of the second exterior cover 60 is explained, however, the configuration is not limited to the through hole H. That is, as shown in FIG. 9, a hole H1 not penetrating may be formed in the end portion 63e (curving portion 63) of the second exterior cover 60. In this case, water is not drained to the inside of the second exterior cover 60, however, the water moving along the gap G may be blocked in a location where the hole H1 is formed and dripped to immediately below the hole H1. Thereby, the water dripping at the front side of the hole H1 may be suppressed. Or, in place of the through hole H, a groove or slit extending downward or the like may be formed.

### [Second Modified Example]

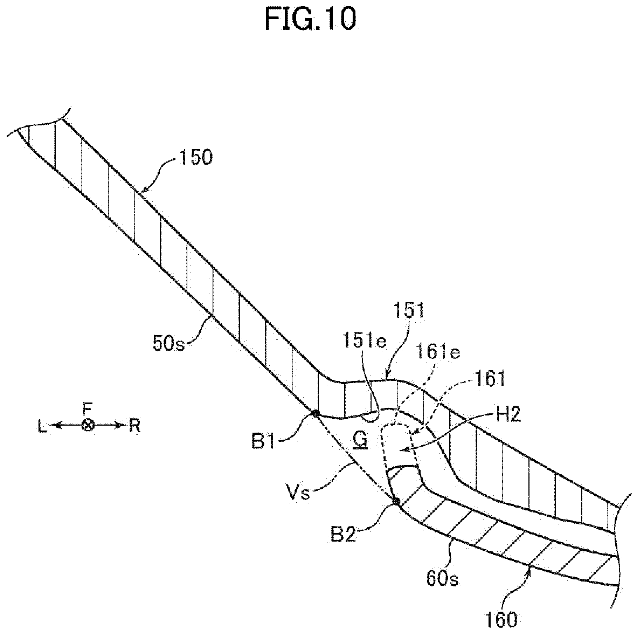

In the above described embodiment, the example in which the part of the exterior cover placed on the downside (second exterior cover 60) is provided at the inside in the vehicle width directions of the exterior cover placed on the upside (first exterior cover 50) is explained, but the configuration is not limited to that. As shown in FIG. 10, a part of a first exterior cover 150 placed at the upside may be provided at the inside of a second exterior cover 160 placed at the downside.

In this case, the first exterior cover 150 may have a curving portion 151 forming an end portion 151e (first end) and the second exterior cover 160 may have an end portion 161 including an end surface 161e (second end) and a hole H2 formed therein.

Note that, in the above described embodiment and modified examples, the examples in which the single hole is formed in the second exterior cover are explained, however, the configurations are not limited to that, and two or more holes may be formed. With the two or more holes, the water moving along the gap G is blocked in a plurality of locations. Thereby, water dripping in the visible part on the exterior surface may be suppressed more reliably.

### [Summary of Embodiments]

(1) A straddled electric vehicle includes the front wheel 14, the rear wheel 20, the first exterior cover 50 provided at the upside of the rear wheel 20 and extending in the forward and backward directions in the side view, the second exterior cover 60 provided at the downside of the first exterior cover 50 and extending in the forward and backward directions in the side view, and the virtual surface Vs defined as the surface connecting the exterior surface 50s of the first exterior cover 50 and the exterior surface 60s of the second exterior cover 60, the second exterior cover 60 is placed to form the gap G extending in the forward and backward directions between the lower end 51 extending in the forward and backward directions of the first exterior cover 50 and the end portion 63e extending in the forward and backward directions of the second exterior cover 60 and facing the lower end 51 and inside of the virtual surface Vs, and at least one through hole H is formed in the part of the end portion 63e.
(2) The through hole H is formed at the side rearward of the front end E1 of the rear wheel 20.
(3) The area of the exterior surface 60s at the front side of the through hole H of the second exterior cover 60 may be larger than the area of the exterior surface 60s at the side rearward of the through hole H.
(4) The part of the through hole H is covered by the first exterior cover 50 and the other part of the through hole H is exposed to outside in the side view.
(5) The width of the other part of the through hole H in the forward and backward directions is from 2 mm to 10 mm.
(6) The width of the other part of the through hole H in the upward and downward directions is from 3 mm to 10 mm.
(7) The gap G is inclined downward toward the front side.
(8) The hole is the through hole.
(9) The first exterior covers 50 and the second exterior covers 60 are respectively provided in the left portion and the right portion of the vehicle, and the through holes are respectively formed in the left portion and the right portion of the vehicle.
(10) The tandem step 27 on which the foot of the tandem rider is mounted is provided, and the second exterior cover 60 overlaps with the tandem step 27 in the side view.
(11) The tail lamp 25 provided in the rear portion of the vehicle, and the rear exterior cover 70 provided below the tail light 25 and above the rear wheel 20 and adjacent to the first exterior cover 50 are provided.
(12) The second exterior cover 60 includes the curving portion 63 curving toward the inside in the vehicle width directions and forming the end portion 63e, and the through hole H is formed in the curving portion 63.

## Claims

1. A straddled electric vehicle comprising:
a front wheel (14);
a rear wheel (20);
at least one first exterior cover (50) provided at an upside of the rear wheel (20) with regard to upward and downward directions of the vehicle and extending in forward and backward directions (F, B) of the vehicle in a side view;
at least one second exterior cover (60) provided at a downside of the first exterior cover (50) with regard to upward and downward directions of the vehicle and
extending in the forward and backward directions (F, B) of the vehicle in the side view; and
a virtual surface (Vs) defined as a surface connecting an exterior surface (50s) of the first exterior cover (50) and an exterior surface (60s) of the second exterior cover (60),
wherein the second exterior cover (60) is placed to form a gap (G) extending in the forward and backward directions (F, B) of the vehicle between a first end (51, 151e) extending in the forward and backward directions (F, B) of the first exterior cover (50) and a second end (63e, 161e) extending in the forward and backward directions (F, B) of the second exterior cover (60) and facing the first end (51, 151e) and inside of the virtual surface (Vs), and
at least one hole (H, H1, H2) is formed in a part of the second end (63e, 161e), and a part of the hole (H, H1, H2) is exposed to outside of the vehicle in the side view.

2. The straddled electric vehicle according to claim 1, wherein the hole (H, H1, H2) is formed at a side rearward of a front end (E1) of the rear wheel (20) with regard to the forward and backward directions (F, B) of the vehicle.

3. The straddled electric vehicle according to claim 1 or 2, wherein an area of the exterior surface (60s) of the second exterior cover (60) at a forward of the hole (H, H1, H2) with regard to the forward and backward directions (F, B) of the vehicle is larger than an area of the exterior surface (60s) of the second exterior cover (60) at rearward of the hole (H, H1, H2) with regard to the forward and backward directions (F, B) of the vehicle.

4. The straddled electric vehicle according to any one of claims 1 to 3, wherein a part of the hole (H, H1, H2) is covered by the first exterior cover (50).

5. The straddled electric vehicle according to claim 4, wherein a width in the forward and backward directions (F, B) of the vehicle of the part of the hole (H, H1, H2) that is exposed to outside of the vehicle in the side view is from 2 mm to 10 mm.

6. The straddled electric vehicle according to claim 4 or 5, wherein a width in upward and downward directions of the vehicle of the part of the hole (H, H1, H2) that is exposed to outside of the vehicle in the side view is from 3 mm to 10 mm.

7. The straddled electric vehicle according to any one of claims 1 to 6, wherein the gap (G) is inclined downward in upward and downward directions of the vehicle toward a front side in the forward and backward directions (F, B) of the vehicle.

8. The straddled electric vehicle according to any one of claims 1 to 7, wherein the hole (H, H2) is a through hole.

9. The straddled electric vehicle according to any one of claims 1 to 8, wherein a pair of first exterior covers (50) and a pair of second exterior covers (60) are respectively provided in a left portion and a right portion with regard to leftward and rightward directions (L, R) of the vehicle, and
the holes (H, H1, H2) are respectively formed at the left portion and the right portion.

10. The straddled electric vehicle according to any one of claims 1 to 9, further comprising at least one tandem step (27) configured to place a foot of a tandem rider thereon,
wherein the second exterior cover (60) overlaps with the tandem step (27) in the side view of the vehicle.

11. The straddled electric vehicle according to any one of claims 1 to 10, further comprising:
a tail lamp (25) provided in a rear portion with regard to the forward and backward directions (F, B) of the vehicle; and
a rear exterior cover (70) provided below the tail light (25) and above the rear wheel (20) with regard to upward and downward directions of the vehicle and adjacent to the first exterior cover (50).

12. The straddled electric vehicle according to any one of claims 1 to 11, wherein the second exterior cover (60) includes a curving portion (63) curving toward the inside in the vehicle width directions with regard to leftward and rightward directions (L, R) of the vehicle and forming the second end (63e), and
the hole (H, H1, H2) is formed in the curving portion (63).

## Patentansprüche

1. Ein Spreiz-Sitz-Elektro-Fahrzeug, das umfasst:
ein Vorderrad (14);
ein Hinterrad (20);
zumindest eine erste Außenabdeckung (50), die an einer Oberseite des Hinterrads (20) in Bezug auf Aufwärts- und Abwärtsrichtungen des Fahrzeugs vorgesehen ist und sich in Vorwärts- und Rückwärtsrichtung (F, B) des Fahrzeugs in einer Seitenansicht erstreckt;
zumindest eine zweite Außenabdeckung (60), die an der Unterseite der ersten Außenabdeckung (50) in Bezug auf Aufwärts- und Abwärtsrichtungen des Fahrzeugs vorgesehen ist und sich in Vorwärts- und Rückwärtsrichtung (F, B) des Fahrzeugs in der Seitenansicht erstreckt; und
eine virtuelle Fläche (Vs), die als eine Fläche definiert ist, die eine Außenfläche (50s) der ersten Außenabdeckung (50) und eine Außenfläche (60s) der zweiten Außenabdeckung (60) verbindet,
wobei die zweite Außenabdeckung (60) angeordnet ist, um einen Spalt (G) zu bilden, der sich in Vorwärts- und Rückwärtsrichtungen (F, B) des Fahrzeugs zwischen einem ersten Ende (51, 151e), das sich in der Vorwärts- und Rückwärtsrichtung (F, B) der ersten Außenabdeckung (50) erstreckt, und einem zweiten Ende (63e, 161e), das sich in der Vorwärts- und Rückwärtsrichtung (F, B) der zweiten Außenabdeckung (60) erstreckt und dem ersten Ende (51, 151e) und der Innenseite der virtuellen Oberfläche (Vs) zugewandt ist, erstreckt, und
zumindest ein Loch (H, H1, H2) in einem Teil des zweiten Endes (63e, 161e) ausgebildet ist, und ein Teil des Lochs (H, H1, H2) zur Außenseite des Fahrzeugs hin in der Seitenansicht freiliegt.

2. Das Spreiz-Sitz-Elektro-Fahrzeug gemäß Anspruch 1, wobei das Loch (H, H1, H2) an einer Seite hinter einem vorderen Ende (E1) des Hinterrades (20) in Bezug auf die Vorwärts- und Rückwärtsrichtungen (F, B) des Fahrzeugs ausgebildet ist.

3. Das Spreiz-Sitz-Elektro-Fahrzeug gemäß Anspruch 1 oder 2, wobei ein Bereich der Außenfläche (60s) der zweiten Außenabdeckung (60) vor dem Loch (H, H1, H2) in Bezug auf die Vorwärts- und Rückwärtsrichtungen (F, B) des Fahrzeugs größer ist als ein Bereich der Außenfläche (60s) der zweiten Außenabdeckung (60) hinter dem Loch (H, H1, H2) in Bezug auf die Vorwärts- und Rückwärtsrichtungen (F, B) des Fahrzeugs.

4. Das Spreiz-Sitz-Elektro-Fahrzeug gemäß irgendeinem der Ansprüche 1 bis 3, wobei ein Teil des Lochs (H, H1, H2) durch die erste Außenabdeckung (50) abgedeckt ist.

5. Das Spreiz-Sitz-Elektro-Fahrzeug gemäß Anspruch 4, wobei eine Breite , in Vorwärts- und Rückwärtsrichtung (F, B) des Fahrzeugs des Teils des Lochs (H, H1, H2), der zur Außenseite des Fahrzeugs in der Seitenansicht freiliegt, von 2 mm bis 10 mm ist.

6. Das Spreiz-Sitz-Elektro-Fahrzeug gemäß Anspruch 4 oder 5, wobei eine Breite in Aufwärts- und Abwärtsrichtungen des Fahrzeugs des Teils des Lochs (H, H1, H2), der zur Außenseite des Fahrzeugs der hin in der Seitenansicht freiliegt, von 3 mm und 10 mm ist.

7. Das Spreiz-Sitz-Elektro-Fahrzeug gemäß irgendeinem der Ansprüche 1 bis 6, wobei der Spalt (G) nach unten geneigt ist, in Aufwärts- und Abwärtsrichtungen des Fahrzeugs, zu einer Vorderseite in Vorwärts- und Rückwärtsrichtungen (F, B) des Fahrzeugs.

8. Das Spreiz-Sitz-Elektro-Fahrzeug gemäß irgendeinem der Ansprüche 1 bis 7, wobei das Loch (H, H2) ein Durchgangsloch ist.

9. Das Spreiz-Sitz-Elektro-Fahrzeug gemäß irgendeinem der Ansprüche 1 bis 8, wobei ein Paar erster Außenabdeckungen (50) und ein Paar zweiter Außenabdeckungen (60) jeweils in einem linken Abschnitt und einem rechten Abschnitt in Bezug auf linke und rechte Richtungen (L, R) des Fahrzeugs vorgesehen sind, und
die Löcher (H, H1, H2) jeweils im linken und rechten Abschnitt gebildet sind.

10. Das Spreiz-Sitz-Elektro-Fahrzeug gemäß irgendeinem der Ansprüche 1 bis 9, das ferner zumindest eine Tandemstufe (27) umfasst, die konfiguriert ist, um einen Fuß eines Tandemfahrers darauf abzustellen,
wobei sich die zweite Außenabdeckung (60) mit der Tandemstufe (27) in der Seitenansicht des Fahrzeugs überlappt.

11. Das Spreiz-Sitz-Elektro-Fahrzeug gemäß irgendeinem der Ansprüche 1 bis 10, das weiter umfasst:
eine Rückleuchte (25), die in einem hinteren Bereich in Bezug auf die Vorwärts- und Rückwärtsrichtungen (F, B) des Fahrzeugs vorgesehen ist; und
eine hintere Außenabdeckung (70), die unterhalb der Rückleuchte (25) und oberhalb des Hinterrads (20) in Bezug auf die Aufwärts- und Abwärtsrichtungen des Fahrzeugs und benachbart zu der erste Außenabdeckung (50) vorgesehen ist.

12. Das Spreiz-Sitz-Elektro-Fahrzeug gemäß irgendeinem der Ansprüche 1 bis 11, wobei die zweite Außenabdeckung (60) einen gekrümmten Abschnitt (63) aufweist, der sich in Fahrzeugbreitenrichtungen in Bezug auf die auf linke und rechte Richtungen (L, R) des Fahrzeugs nach innen krümmt und das zweite Ende (63e) bildet, und
das Loch (H, H1, H2) in dem gekrümmten Abschnitt (63) gebildet ist.

## Revendications

1. Véhicule électrique à califourchon comprenant :
une roue avant (14) ;
une roue arrière (20) ;
au moins un premier couvercle extérieur (50) situé à l'extrémité supérieure de la roue arrière (20) par rapport aux directions ascendante et descendante du véhicule et s'étendant dans les directions avant et arrière (F, B) du véhicule dans une vue de côté ;
au moins un second couvercle extérieur (60) situé en bas du premier couvercle extérieur (50) par rapport aux directions ascendante et descendante du véhicule et s'étendant dans les directions avant et arrière (F, B) du véhicule dans la vue de côté ; et
une surface virtuelle (Vs) définie comme une surface reliant une surface extérieure (50s) du premier couvercle extérieur (50) et une surface extérieure (60s) du second couvercle extérieur (60),
dans lequel la seconde couverture extérieure (60) est placée de manière à former un espace (G) s'étendant dans les directions avant et arrière (F, B) du véhicule entre une première extrémité (51, 151e) s'étendant dans les directions avant et arrière (F, B) de la première couverture extérieure (50) et une seconde extrémité (63e, 161e) s'étendant dans les directions avant et arrière (F, B) de la seconde couverture extérieure (60) et faisant face à la première extrémité (51, 151e) et à l'intérieur de la surface virtuelle (Vs), et
au moins un trou (H, H1, H2) est formé dans une partie de la second extrémité (63e, 161e), et une partie du trou (H, H1, H2) est exposée à l'extérieur du véhicule dans la vue latérale.

2. Véhicule électrique à califourchon selon la revendication 1, dans lequel le trou (H, H1, H2) est formé sur un côté arrière d'une extrémité avant (E1) de la roue arrière (20) par rapport aux directions avant et arrière (F, B) du véhicule.

3. Véhicule électrique à califourchon selon les revendications 1 ou 2, dans lequel une zone de la surface extérieure (60s) du second couvercle extérieur (60) à l'avant du trou (H, H1, H2) par rapport aux directions avant et arrière (F, B) du véhicule est plus grande qu'une zone de la surface extérieure (60s) du second couvercle extérieur (60) à l'avant du trou (H, H1, H2) par rapport à la direction avant et arrière (F, B) du véhicule,
à l'arrière du trou (H, H1, H2) par rapport aux directions avant et arrière (F, B) du véhicule.

4. Véhicule électrique à califourchon selon l'une quelconque des revendications 1 à 3, dans lequel une partie du trou (H, H1, H2) est recouverte par le premier couvercle extérieur (50).

5. Véhicule électrique à califourchon selon la revendication 4, dans lequel une largeur dans les directions avant et arrière (F, B) du véhicule de la partie du trou (H, H1, H2) qui est exposée à l'extérieur du véhicule dans la vue latérale est de 2 mm à 10 mm.

6. Véhicule électrique à califourchon selon les revendications 4 ou 5, dans lequel une largeur dans les directions ascendante et descendante du véhicule de la partie du trou (H, H1, H2) qui est exposée à l'extérieur du véhicule dans la vue latérale est de 3 mm à 10 mm.

7. Véhicule électrique à califourchon selon l'une des revendications 1 à 6, dans lequel l'espace (G) est incliné vers le bas dans les directions ascendante et descendante du véhicule vers un côté avant dans les directions avant et arrière (F, B) du véhicule.

8. Véhicule électrique à califourchon selon l'une des revendications 1 à 7, dans lequel le trou (H, H2) est un trou traversant.

9. Véhicule électrique à califourchon selon l'une quelconque des revendications 1 à 8, dans lequel une paire de premiers capots extérieurs (50) et une paire de seconds capots extérieurs (60) sont respectivement prévus dans une partie gauche et une partie droite par rapport aux directions gauche et droite (L, R) du véhicule, et
les trous (H, H1, H2) sont respectivement formés dans la partie gauche et dans la partie droite.

10. Véhicule électrique à califourchon selon l'une des revendications 1 à 9, comprenant en outre au moins une marche de tandem (27) configurée pour y placer le pied d'un passager de tandem,
dans lequel le second couvercle extérieur (60) chevauche la marche de tandem (27) dans la vue latérale du véhicule.

11. Véhicule électrique à califourchon selon l'une des revendications 1 à 10, comprenant en outre :
un feu arrière (25) situé dans une partie arrière par rapport aux directions avant et arrière (F, B) du véhicule ; et
un capot extérieur arrière (70) situé sous le feu arrière (25) et au-dessus de la roue arrière (20) par rapport aux directions ascendante et descendante du véhicule et adjacent au premier capot extérieur (50).

12. Véhicule électrique à califourchon selon l'une des revendications 1 à 11, dans lequel le second couvercle extérieur (60) comprend une partie incurvée (63) s'incurvant vers l'intérieur dans les directions de la largeur du véhicule par rapport aux directions gauche et droite (L, R) du véhicule et formant la seconde extrémité (63e), et
le trou (H, H1, H2) est formé dans la partie incurvée (63).
